# EUROPÄISCHE PATENTSCHRIFT

(11) **EP 1 924 385 B1**
(45) Veröffentlichungstag und Bekanntmachung des Hinweises auf die Patenterteilung: **19.01.2011**
(21) Anmeldenummer: 06774771.7
(22) Anmeldetag: 07.09.2006
(51) Int. Cl.: B23K 9/095, B23K 9/10, G06F 9/44

(54) **FERNZUGRIFFSEINHEIT UND VERFAHREN ZUR VERWALTUNG VON ÜBER SCHNITTSTELLEN MIT EINEM NETZWERK VERBUNDENEN SCHWEISSGERÄTEN**
REMOTE ACCESS UNIT AND METHOD FOR MANAGING WELDING UNITS CONNECTED TO A NETWORK VIA INTERFACES
UNITE D'ACCES A DISTANCE ET PROCEDE DE GESTION DE POSTES DE SOUDURE RELIES A UN RESEAU PAR DES INTERFACES

(30) Priorität: 09.09.2005 AT 14782005
(43) Veröffentlichungstag der Anmeldung: 28.05.2008
(73) Patentinhaber: Fronius International GmbH, 4643 Pettenbach (AT)
(72) Erfinder: LEKO, Tomas, A-4600 Wels (AT); PERNEGGER, Markus, A-4653 Eberstalzell (AT); RUMPL, Manuel, A-4621 Sipbachzell (AT); SCHICK, Roland, A-4642 Sattledt (AT); STÖGER, Markus, A-4655 Vorchdorf (AT); WITTMANN, Manfred, A-4845 Rutzenmoos (AT)
(74) Vertreter: Sonn & Partner Patentanwälte
(86) Internationale Anmeldenummer: PCT/AT2006/000373
(87) Internationale Veröffentlichungsnummer: WO 2007/028188

(56) Entgegenhaltungen:
- US-A- 6 104 393
- US-A1- 2004 262 279
- US-B1- 6 479 792
- US-B1- 6 583 386
- US-B1- 6 744 011

## Beschreibung

Die Erfindung betrifft eine Fernzugriffseinheit zur Verwaltung von über Schnittstellen mit einem Netzwerk verbundenen Schweißgeräten und ein Verfahren zur Kommunikation zwischen zumindest einer Fernzugriffseinheit und zumindest einem in einem Netzwerk angeordneten Schweißgerät mit zumindest einer Stromquelle, einer Steuervorrichtung und einer Schnittstelle zum Netzwerk gemäß dem Oberbegriff der Ansprüche 1 und 17 (siehe, z.B., US 6 583 386 B1).

Aus dem Stand der Technik sind Vorrichtungen zum Verwalten von Schweißgeräten, welche über ein Netzwerk miteinander verbunden sind, bekannt, mit denen ein Schweißgerät von einer Fernzugriffseinheit über das Netzwerk eingestellt werden kann. Beispielsweise ist aus der US 6 479 792 B1 bekannt, dass ein am Netzwerk angeschlossenes Schweißgerät über einen ebenso am Netzwerk angeschlossenen Computer, also eine Fernzugriffseinheit, konfiguriert werden kann. Hierzu ist am Computer eine geeignete Software installiert.

Die US 6 583 386 B1 zeigt ein Verfahren und System zum Überwachen und Verfolgen von Schweißprozessen, mit dem mit Hilfe entsprechender Sensoren die Schweißung erfasst und aus Gründen der Qualitätskontrolle gespeichert wird. Schweißverbindungen mit niedrigerer Qualität können damit identifiziert werden und es steht entsprechende Information für spätere Analysen zur Verfügung.

Aus der US 6 744 011 B1 ist eine Software zur Konfiguration von Schweißgeräten bekannt, welche auf einem entsprechenden Computer installiert ist. Der Computer weist einen Monitor auf, auf welchem eine grafische Oberfläche der Software dargestellt wird. Diese dient dazu, einen Schweißprozess in einem so genannten Fenster zu überwachen und die Schweißparameter für eine Qualitätsüberwachung zu speichern. Ebenso können die an der graphischen Oberfläche dargestellten Schweißparameter vom Benutzer der Software entsprechend definiert werden. Zur Überwachung mehrerer Schweißprozesse gleichzeitig muss der Benutzer der Software entsprechend mehrere Fenster öffnen.

Nachteilig ist hierbei, dass die Anzahl der gleichzeitig zu überwachenden Schweißgeräte bzw. Schweißprozesse, welche sich im Netzwerk befinden, eingeschränkt ist, da für jeden Schweißprozess ein eigenes Fenster am Monitor dargestellt werden muss. Dadurch können nur jene Schweißgeräte überwacht werden, insbesondere deren Betriebszustände, deren Parameter am Monitor dargestellt sind. Ebenso kann eine übersichtliche Darstellung der Parameter der Schweißgeräte, welche von der Software überwacht werden können, mit Hilfe der Software nicht eingestellt werden.

Die Aufgabe der Erfindung liegt darin, eine Fernzugriffseinheit zur Verwaltung von Schweißgeräten zu schaffen, mit welcher eine beliebige Anzahl von Schweißgeräten erfasst, verwaltet, konfiguriert und dargestellt werden kann.

Ein Funzugriffeinheit gemäß der Erfindung ist im Anspruch 1 definiert.

Vorteilhaft ist hierbei, dass eine unbegrenzte Anzahl von Schweißgeräten übersichtlich dargestellt und konfiguriert werden kann. Ebenso wird durch die zentrale grafische Oberfläche erreicht, dass kein Wechsel zwischen verschiedenen Fenstern erforderlich ist. Ebenso ist von Vorteil, dass das Softwaremodul die Konfigurationen bzw. Parameter der Schweißgeräte speichert, wodurch ein Vergleich der gespeicherten Konfigurationen bzw. Parameter mit der aktuellen Konfiguration des entsprechenden Schweißgerätes durchgeführt werden kann. Falls bei einem derartigen Vergleich Unterschiede erkannt werden, wird dies in vorteilhafter Weise dem Benutzer des Softwaremoduls in übersichtlicher Form mit grafischer Unterstützung dargestellt und der Benutzer kann entscheiden, welche Konfiguration das Schweißgerät verwenden soll.

Durch die Maßnahme, dass die zentrale grafische Oberfläche in mehrere Navigationsbereiche unterteilt ist, wird in vorteilhafter Weise erreicht, dass ein einfacher Wechsel zwischen den zu konfigurierenden Schweißgeräten möglich ist. Ebenso kann stets ein neues Schweißgerät ausgewählt werden. Dies wird in vorteilhafter Weise durch die Zuordnung der Schweißgeräte zu Bereichen zusätzlich vereinfacht.

Dadurch, dass der Navigationsbereich zur Konfiguration eines Schweißgerätes in mehrere Ebenen unterteilt ist, wird die Handhabung der Konfiguration erleichtert und zusätzlich die Übersichtlichkeit der zentralen grafischen Oberfläche erhöht.

In vorteilhafter Weise wird durch die Maßnahme, dass die Historie der Konfigurationsänderungen gespeichert wird, erreicht, dass jederzeit die Änderungen der Konfiguration eines Schweißgerätes nachvollzogen werden können.

Von Vorteil ist auch der Einsatz von Navigationselementen, wodurch die Übersichtlichkeit der zentralen grafischen Oberfläche erhöht wird.

Durch die Maßnahme, dass die Konfiguration des Schweißgerätes über das Softwaremodul automatisch in der Fernzugriffseinheit gespeichert werden kann und dementsprechend wieder in zumindest ein Schweißgeräte eingespielt werden kann, wird in vorteilhafter weise die Ausfallzeit eines Schweißgerätes verkürzt, da eine gespeicherte Konfiguration jederzeit ins Schweißgerät eingespielt werden kann, wodurch eine Fehlersuche entfällt.

Von Vorteil ist auch, dass in den Symbolen, mit welchen die Schweißgeräte in den Navigationsbereichen dargestellt sind, der Status der Schweißgeräte dargestellt ist, wodurch auf einen Blick der Status der in den Navigationsbereichen dargestellten Schweißgeräte ersichtlich ist.

Eine weitere Aufgabe der Erfindung besteht in der Schaffung eines oben genannten Verfahrens zur Kommunikation zwischen zumindest einer Fernzugriffseinheit und zumindest einem in einem Netzwerk angeordneten Schweißgerät, mit dem Unterschiede in der Konfiguration der Schweißgeräte und der entsprechenden gespeicherten Sicherung der Konfiguration erkannt und übersichtlich dargestellt werden können.

Ein Verfahren gemäß der Erfindung ist im Anspruch 17 definiert.

Vorteilhaft ist hierbei, dass durch den Vergleich der Konfigurationen der Zeitaufwand für die Fehlersuche wesentlich minimiert wird bzw. die Unterschiede in den Konfigurationen auf einen Blick ersichtlich sind. Von Vorteil ist, dass eine beliebige Anzahl von Schweißgeräten erkannt wird wodurch das Netzwerk mit beliebig vielen Schweißgeräten erweitert werden kann, ohne dass verfahrensmäßig eine Änderung vorgenommen werden muss.

In vorteilhafter Weise wird durch die Maßnahme, dass die Sicherungen der Konfigurationen der Schweißgeräte zeitlich gesteuert erfolgen und ebenso wieder in die entsprechenden Schweißgeräte eingespielt werden können, erreicht, dass der zeitliche Aufwand für die Wartung wesentlich minimiert wird.

Ebenso wird der Wartungsaufwand durch die Maßnahme minimiert, dass eine Aktualisierung der Software im Schweißgerät zeitlich gesteuert und für mehrere Schweißgeräte gleichzeitig erfolgt.

Die vorliegende Erfindung wird anhand der beigefügten, schematischen Zeichnungen näher erläutert.

Darin zeigen:
- Fig. 1: eine exemplarische Darstellung einer Schweißmaschine bzw. eines Schweißgerätes;
- Fig. 2: eine exemplarische Darstellung mehrere Schweißgeräte, welche über ein Netzwerk miteinander verbunden sind; und
- Fig. 3: bis 7 verschiedene exemplarische Darstellungen der erfin- dungsgemäßen zentralen grafischen Oberfläche des Softwa- remoduls.

Einführend wird festgehalten, dass gleiche Teile des Ausführungsbeispiels mit gleichen Bezugszeichen versehen werden.

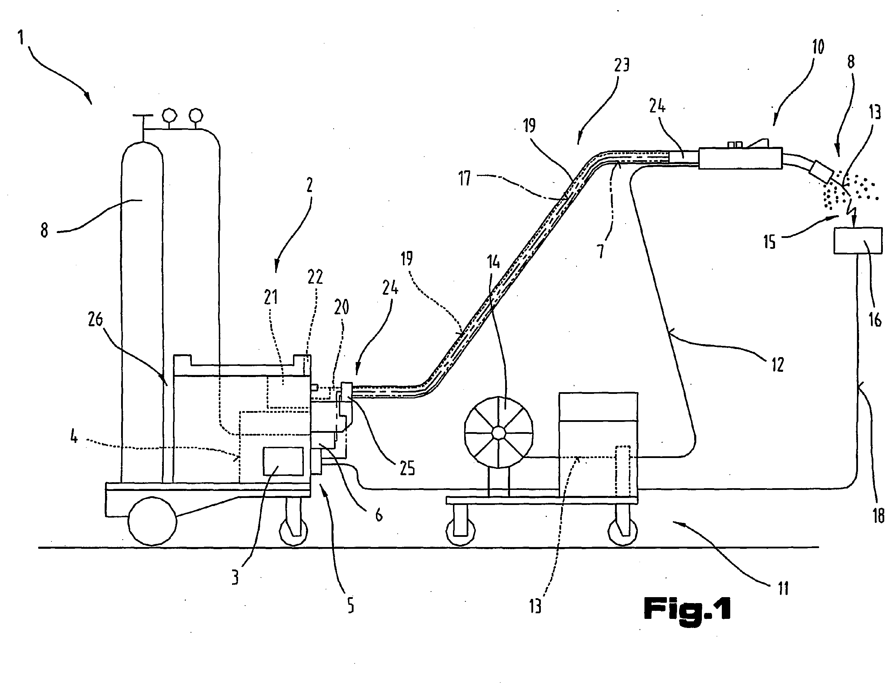

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der nicht abschmelzenden Elektrode, nicht dargestellt, und einem Werkstück 16 wird über eine Schweißleitung 17 vom Leistungsteil 3 der Stromquelle 2 dem. Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

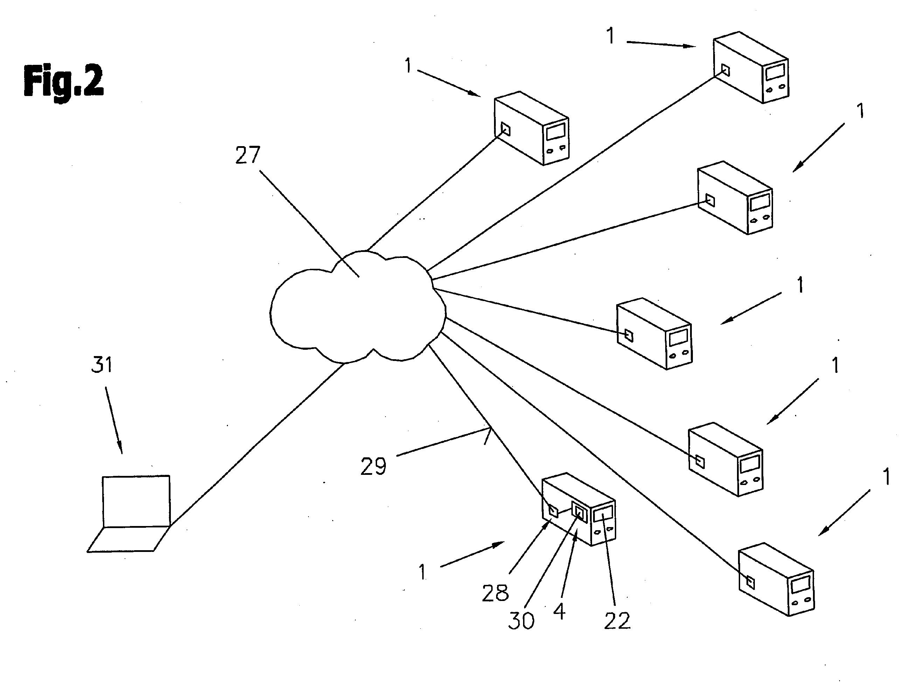

In Fig. 2 sind mehrere Schweißgeräte 1 dargestellt, welche über ein Netzwerk 27 miteinander verbunden sind. Hierzu haben die Schweißgeräte 1, wie aus dem Stand der Technik bekannt, eine Schnittstelle 28 integriert, welche eine Verbindung der Schweißgeräte 1 mit dem Netzwerk 27 ermöglicht. Die Verbindung erfolgt beispielsweise über ein Netzwerkkabel 29, ein so genanntes LAN-Kabel. Ebenso ist die Schnittstelle 28 mit der Steuervorrichtung 4 des Schweißgerätes 1 verbunden. Die Steuervorrichtung 4 ist insbesondere aus einem Mikroprozessor 30 gebildet, welcher einen Schweißprozess steuert bzw. regelt. Hierzu erfasst der Mikroprozessor 30 alle Einstellungen, welche über die Ein-/Ausgabevorrichtung 22 vorgenommen werden. Ebenso kann der Mikroprozessor 30 die erforderlichen Einstellungen für einen Schweißprozess über die Schnittstelle 28 erfassen bzw. über das Netzwerk 27 empfangen. Dadurch wird ein Fernzugriff bzw. ein so genannter Remote-Zugriff auf ein bzw. mehrere Schweißgeräte 1 über das Netzwerk 27 ermöglicht. Der Fernzugriff erfolgt über eine am Netzwerk 27 angeschlossene Fernzugriffseinheit 31, bevorzugt über einen Computer. Auf der Fernzugriffseinheit 31 ist eine geeignete Software bzw. ein geeignetes Softwaremodul installiert, welche(s) den Fernzugriff auf die Schweißgeräte 1 ermöglicht. Im Wesentlichen können über den Fernzugriff die Schweißparameter für einen Schweißprozess eingestellt und überwacht werden.

Damit nun die vorgenommenen Einstellungen an der Software für einen Schweißprozess an den Mikroprozessor 30 des Schweißgerätes 1 übertragen werden können, ist ein Verbindungsaufbau erforderlich. Hierzu ist den Schweißgeräten 1 eine im Netzwerk 27 einzigartige Adresse, beispielsweise die so genannte IP-Adresse, zugeordnet. Diese ist beispielsweise vom Hersteller des Schweißgerätes 1 voreingestellt und kann ebenso vom Benutzer des Schweißgerätes 1 an das Netzwerk 27 angepasst werden. Für einen Verbindungsaufbau muss diese einzigartige Adresse ebenso der Software bekannt sein. Dies erfolgt beispielsweise derart, dass die einzigartige Adresse in der Software eingetragen wird oder das Schweißgerät 1 von der Software bezüglich der Adresse abgefragt wird. Dadurch kann eine Verbindung zwischen dem Mikroprozessor 30 des Schweißgerätes 1 und der Fernzugriffseinheit 31 hergestellt werden. Über diese Verbindung im Netzwerk 27 können anschließend die an der Software vorgenommenen Einstellungen für einen Schweißprozess, beispielsweise über das bekannte TCP/IP-Protokoll, an den Mikroprozessor 30 über die Schnittstelle 28 im Schweißgerät 1 übertragen werden.

Ebenso ist es möglich, dass die Software zusätzliche Funktionen ermöglicht, beispielsweise die Anzeige des Betriebszustandes des Schweißgerätes 1, eine Fehlerüberwachung, Dokumentation von Schweißprozessen, Änderungen der Software des Schweißgerätes 1 und ähnliche Funktionen.

Zur Konfiguration eines Schweißgerätes über die Software dient ein so genanntes Fenster, in welchem die Schweißparameter für einen Schweißprozess dargestellt sind bzw. ausgewählt und dementsprechend verändert werden können. Hierzu sind im Fenster mehrere Unterfenster integriert. Ebenso kann ein Unterfenster zur grafischen Darstellung eines Schweißparameters während eines Schweißprozesses dienen. Sollen vom Benutzer der Software mehrere Schweißprozesse gleichzeitig überwacht werden, muss dieser dementsprechend viele Fenster öffnen. Die Anzahl der Fenster ist aufgrund einer übersichtlichen Darstellung auf einem Monitor der Fernzugriffseinheit 31 begrenzt, wodurch ebenso die Anzahl der Schweißgeräte 1 begrenzt ist.

Erfindungsgemäß wird die Software für den Fernzugriff derart erweitert, dass eine beliebige Anzahl von Schweißgeräten 1 im Netzwerk 27 erfasst werden kann und diese auf einer zentralen grafischen Oberfläche 32 zum Konfigurieren, Verwalten und Bedienen dargestellt sind. Ebenso ermöglicht die zentrale grafische Oberfläche 32 der Software die Darstellung mehrerer Schweißgeräte 1 gleichzeitig, wodurch eine Konfiguration zusammenhängender Schweißsysteme vereinfacht wird.

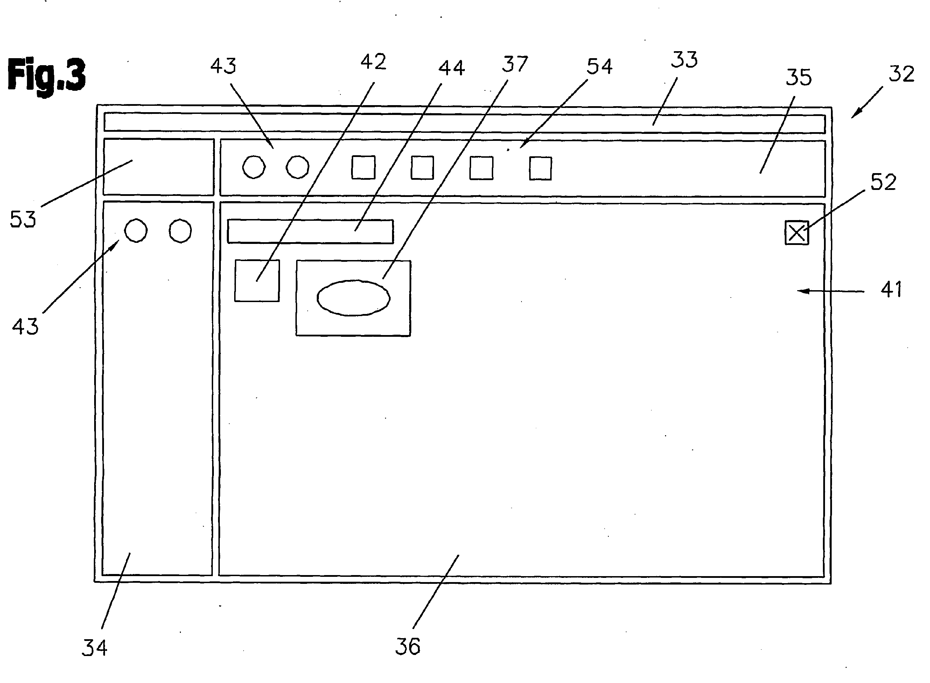

In Fig. 3 ist die zentrale grafische Oberfläche 32 beim Starten der Software schematisch dargestellt.

Hieraus ist ersichtlich, dass die grafische Oberfläche 32 in mehrere Navigationsbereiche 33 bis 36 unterteilt ist. Bevorzugt ist die Oberfläche 32 in einen Navigationsbereich 33, welcher sich horizontal am oberen Rand der zentralen grafischen Oberfläche 32 erstreckt, in einen Navigationsbereich 34, welcher sich senkrecht an der linken Seite der Oberfläche 32 befindet, in einen Navigationsbereich 35, welcher im oberen Bereich der grafischen Oberfläche 32 einen Querbalken bildet, und in einen Navigationsbereich 36, welcher den größten Bereich der grafischen Oberfläche 32 einnimmt, unterteilt. Somit kann die zentrale grafische Oberfläche 32, also die Software, zum Konfigurieren, Verwalten und Bedienen aller Schweißgeräte 1, die sich im Netzwerk 27 befinden, eingesetzt werden.

Dazu müssen die im Netzwerk 27 befindlichen Schweißgeräte 1 der Software bekannt sein, weshalb eine Konfiguration der Software durchgeführt wird. Hierbei erhält die Software die Informationen, welche Schweißgeräte 1 am Netzwerk 27 angeschlossen sind bzw. mit dieser Software verwaltet werden sollen. Grundsätzlich ist hierfür ausreichend, der Software eine Adresse oder einen Namen des Schweißgerätes 1 mitzuteilen. Diese Adresse oder dieser Name ist im Netzwerk 27 einzigartig, wodurch ein Schweißgerät 1 eindeutig identifiziert werden kann, beispielsweise durch die IP-Adresse oder die Seriennummer des Schweißgerätes 1. Selbstverständlich ist diese Adresse auch dem entsprechenden Schweißgerät 1 zugeordnet.

Ebenso ist es auch möglich, dass ein neues Schweißgerät 1 im Netzwerk 27 automatisch erkannt wird, beispielsweise durch ein entsprechend konfiguriertes Netzwerk 27. Dadurch kann die Software mit den Schweißgeräten 1 im Netzwerk 27 kommunizieren und ein Datenaustausch erfolgen. Hierzu wird beispielsweise in bestimmten Zeitabständen von der Software aus eine Abfrage gestartet, ob neue Schweißgeräte 1 am Netzwerk angeschlossen wurden oder nicht. Findet die Software neue Schweißgeräte 1, so werden diese dem Benutzer im Navigationsbereich 36 angezeigt. Gleichzeitig wird von der Software auch überprüft, ob alle Schweißgeräte 1 reibungslos funktionieren oder einen Fehler aufweisen, so dass der Status der Schweißgeräte 1 aktualisiert werden kann.

Die Kommunikation zwischen Software und Schweißgerät 1 wird durch das Zusammenwirken der einzelnen Navigationsbereiche 33 bis 36 visualisiert.

Der Navigationsbereich 33 stellt eine Menüleiste mit unterschiedlichen Einstelloptionen bzw. Menüpunkten, wie beispielsweise "DATEI, EINSTELLUNGEN, USER", dar. Die hier vorgenommenen Einstellungen sind allgemeine Einstellungen, welche für alle Navigationsbereiche 33 bis 36 und Schweißgeräte 1 im Netzwerk 27 Gültigkeit haben, beispielsweise die Vergabe von Rechten für die einzelnen Benutzer bzw. User der Software oder die Angabe von Speicherorten an der Fernzugriffseinheit 31.

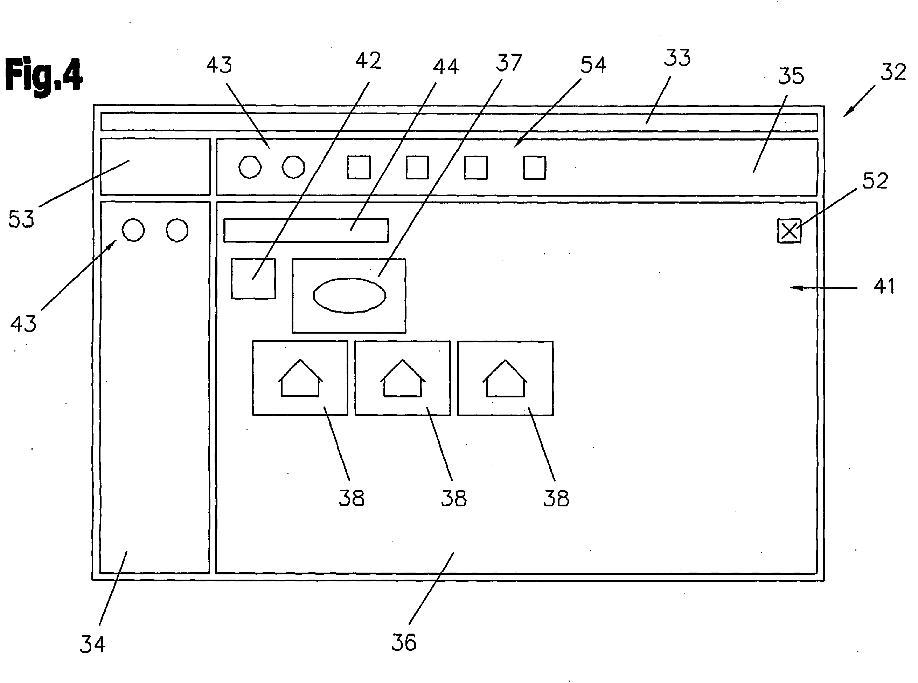

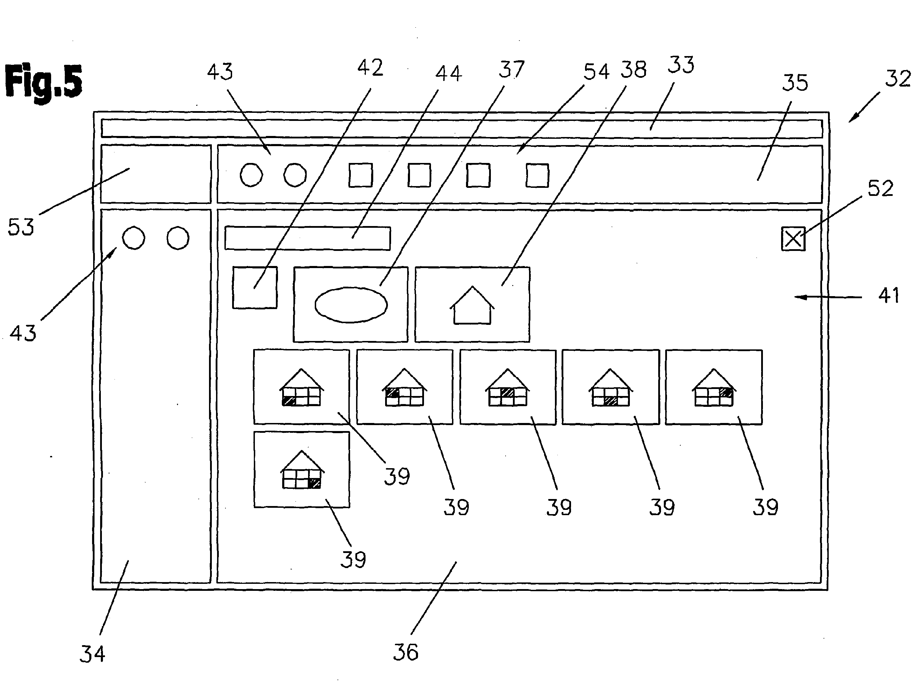

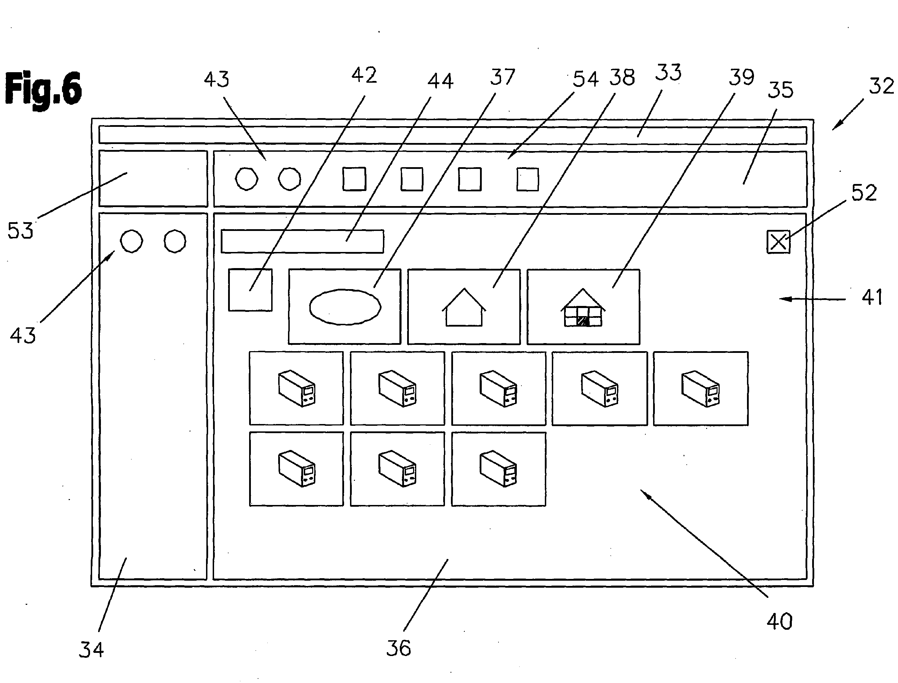

Der Navigationsbereich 36 dient einerseits zur Auswahl eines Schweißgerätes 1 und andererseits erfolgt in diesem Navigationsbereich 36 die detaillierte Konfiguration eines Schweißgerätes 1. Somit dient der Navigationsbereich 36 zur Darstellung zweier unterschiedlicher Ansichten, d.h., dass der Navigationsbereich 36, insbesondere die Darstellung des Navigationsbereiches 36, entsprechend angepasst bzw. verändert wird. Dies ist aus den Fig. 4 bis 6 ersichtlich.

Nachdem die Software gestartet wurde, wird zumindest ein Symbol für den Hersteller 37 im Navigationsbereich 36 angezeigt. Damit wird in vorteilhafter Weise erreicht, dass die Software auch firmenübergreifend für einen großen Konzern eingesetzt werden kann. Durch Auswahl des Herstellers 37, beispielsweise über einen Touch Screen, erscheinen darunter Symbole für die Produktionshallen 38 des Herstellers 37. Nach Auswahl der entsprechenden Produktionshalle 38 erscheinen anstelle der Produktionshallen 38 Symbole für die Bereiche 39, in welche die ausgewählte Produktionshalle 38 unterteilt ist. Wird entsprechend einer der Bereiche 39 ausgewählt, erscheinen anstelle der Bereiche 39 Symbole 40 für die im ausgewählten Bereich 39 befindlichen Schweißgeräte 1. Ein so genannter Pfad 41, d.h. die Position, wo sich das gewünschte Schweißgerät 1 befindet, also die Symbole, Hersteller 37, Produktionshalle 38 und Bereich 39, wird im oberen Bereich des Navigationsbereichs 36 in horizontaler Richtung angezeigt. Selbstverständlich ist es möglich, den Pfad 41 exakter zu definieren, d.h. dass beispielsweise die Bereiche 39 nochmals in Unterbereiche unterteilt sind und dementsprechend in den Unterbereichen die Schweißgeräte 1 enthalten sind. Somit kann das gewünschte Schweißgerät 1 bzw. können die gewünschten Schweißgeräte 1 aus den dem Bereich 39 zugeordneten Schweißgeräten 1, welche unterhalb des Pfades 41 jeweils mit einem Symbol 40 dargestellt sind, ausgewählt werden.

Befindet sich das gewünschte Schweißgerät 1 nicht im ausgewählten Bereich 39 oder möchte der Benutzer wieder zurück zum Startfenster gemäß Fig. 3, kann durch Auswahl eines entsprechenden Symbols 42 auf die Ebene des Herstellers 39 gemäß Fig. 3 gewechselt werden. Somit kann das gewünschte Schweißgerät 1 erneut nach der zuvor beschriebene Prozedur gesucht werden. Ebenso ist es möglich, dass beispielsweise durch Auswahl der Produktionshalle 38 im Pfad 41 ein anderer Bereich 39 innerhalb dieser Produktionshalle 38 ausgewählt wird. Selbstverständlich ist es auch möglich, dass das gewünschte Schweißgerät 1 über eine im Navigationsbereich 36 integrierte Suchfunktion, nicht dargestellt, ausgewählt wird.

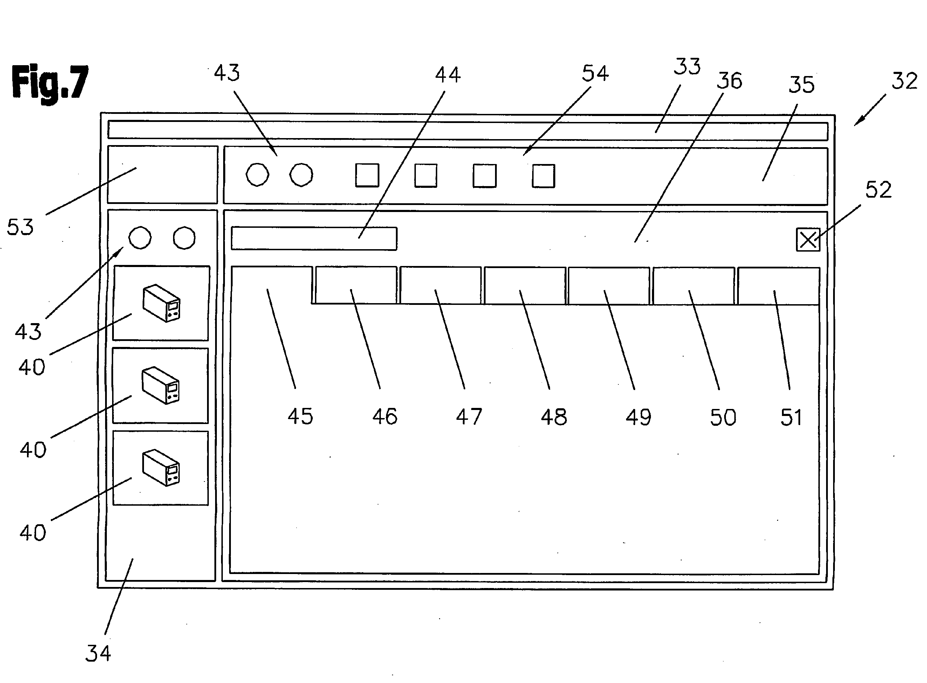

Nach Auswahl des gewünschten Schweißgerätes 1 erscheint dieses mit dem Symbol 40 im Navigationsbereich 34, wie in Fig. 7 dargestellt.

Der Navigationsbereich 34 dient zur Anzeige und Auswahl jener Schweißgeräte 1, welche aktuell vom Benutzer der Software bearbeitet bzw. konfiguriert werden, d.h., dass der Benutzer die entsprechenden Schweißgeräte 1 im Navigationsbereich 36 auswählt und diese dann in den Navigationsbereich 34 übertragen werden. Gleichzeitig wird zu jedem Schweißgerät 1 im Navigationsbereich 34 der Betriebszustand im Symbol 42 dargestellt, d.h. ob das Schweißgerät 1 aktiviert oder deaktiviert bzw. online oder offline ist. Der Betriebszustand der Schweißgeräte 1 ist bevorzugt in einem Kreis dargestellt. Beispielsweise befindet sich ein Haken im Kreis, wenn das Schweißgerät 1 online ist, und ein Kreuz im Kreis, wenn das Schweißgerät 1 offline ist. Ebenso kann dies farblich unterstützt werden, beispielsweise mit einem grünen Kreis für ein aktiviertes Schweißgerät 1 und einem roten Kreis für ein deaktiviertes Schweißgerät 1. Selbstverständlich ist es auch möglich, dass die Betriebszustände auf diese Art und Weise im Navigationsbereich 36 in den Symbolen 40 angezeigt werden. Weiters sind im Navigationsbereich 34 zwei Navigationselemente 43 angeordnet, mit welchen die Symbole 40, also die Schweißgeräte 1, bevorzugt in vertikaler Richtung verschiebbar sind. Somit ist der Navigationsbereich 34 von der Anzahl der Schweißgeräte 1, welche zur selben Zeit bearbeitet werden bzw. dargestellt sind, unabhängig. Hierzu kann im Navigationsbereich 34, beispielsweise unterhalb der Navigationselemente 43, ein Schriftzug dargestellt sein, welcher die Anzahl aller aktuell zu bearbeitenden Schweißgeräte 1 enthält.

Wird vom Navigationsbereich 34 ein Schweißgerät 1, also ein Symbol 40, ausgewählt, erscheinen im Navigationsbereich 36 der zentralen grafischen Oberfläche 32 der Software mehrere Ebenen 45 bis 51. Diese Ebenen 45 bis 51 dienen zur Bearbeitung bzw. zur detaillierten Konfiguration eines ausgewählten Schweißgerätes 1. Beispielsweise ist hierzu der Navigationsbereich 36 in die Ebenen "Übersicht" 45, "Panel" 46, "Jobs" 47, "Doku" 48, "LogBook" 49, "Statistiken" 50 und "Diagramme" 51 unterteilt. Ebenso wird die Bezeichnung des ausgewählten Schweißgerätes 1 im Navigationsbereich 36 in einem Fenster 44 dargestellt und das entsprechende Symbol 40 im Navigationsbereich 34 grafisch verändert. Beispielsweise ändert sich die Hintergrundfarbe des Symbols 40, wodurch es sich von den anderen im Navigationsbereich 34 dargestellten Symbolen 40 unterscheidet.

Nach der Auswahl des entsprechenden Schweißgerätes 1 vom Navigationsbereich 36 werden also die Ebenen 45 bis 51 dargestellt, wobei nur der Inhalt einer der Ebenen 45 bis 51 ersichtlich ist und dementsprechend die Einstellungen verändert werden können. Selbstverständlich kann jederzeit eine andere der Ebenen 45 bis 51 ausgewählt und deren Inhalt zur Konfiguration dargestellt werden.

In der Ebene "Übersicht" 45 sind detaillierte Informationen über das entsprechende Schweißgerät 1 dargestellt, bevorzugt die Bezeichnung des Schweißgerätes 1, die einzigartige Adresse, der Betriebszustand, Wartungsdaten, Betriebsstunden, technische Daten zum Schweißgerät 1 und eine grafische Abbildung des Schweißgerätes 1. Ebenso ist in der Ebene "Übersicht" 45 bevorzugt ein Feld für Notizen vorgesehen, so dass ein oder mehrere Benutzer der Software wichtige Hinweise oder dgl. notieren und lesen können.

Ebenso ermöglicht die Ebene "Übersicht" 45 die Sicherung der aktuellen Einstellungen bzw. der Konfiguration des entsprechenden Schweißgerätes 1. Eine Sicherung der Einstellungen bzw. der Daten aller Ebenen 45 bis 51 eines Schweißgerätes 1 wird beispielsweise durch die Auswahl eines entsprechenden Symbols in der Ebene "Übersicht" 45 durchgeführt. Ebenso ist es möglich, dass eine Zeit bzw. Zeitintervalle eingestellt werden können, wann eine Sicherung der Daten durchgeführt werden soll. Somit erfolgt die Sicherung der Daten automatisiert. Die entsprechenden Daten werden gemäß der Erfindung über das Netzwerk 27 zur Fernzugriffseinheit 31 übertragen und entsprechend als so genannter "Snap-Shot" gespeichert. Der "Snap-Shot" bleibt auch dann gespeichert, wenn das entsprechende Schweißgerät 1 vom Netzwerk 27 getrennt oder ausgeschaltet wird, also offline ist. Dadurch wird erreicht, dass ein so genannter online-offline-Vergleich durchgeführt werden kann, wie dies nachfolgend näher beschrieben wird. Ebenso kann durch ein entsprechendes Symbol in der Ebene "Übersicht" 45 eine vorhandene Sicherung eines Schweißgerätes 1 in dieses oder ein anderes eingespielt werden, also ein so genannter "Restore" der Daten durchgeführt werden. Ein derartiger "Restore" kann selbstverständlich auch für mehrere Schweißgeräte 1 gleichzeitig durchgeführt werden.

Die Ebene "Panel" 46 dient zur Konfiguration der Schweißparameter, beispielsweise Schweißstrom, Schweißspannung, Drahtvorschubgeschwindigkeit, usw., für einen Schweißprozess. Bevorzugt ist die Ebene "Panel" 46 derart dargestellt, dass die grafische Oberfläche im Wesentlichen der Oberfläche der Ein-/Ausgabevorrichtung 22 am Schweißgerät 1 entspricht. Ebenso können sämtliche Einstellungen wie an der Ein-/Ausgabevorrichtung 22 durchgeführt werden. Auch kann das Variieren der Schweißparameter während eines Schweißprozesses in der Ebene "Panel" 46 mitverfolgt werden. Beispielsweise kann die Konfiguration des Schweißgerätes 1 entsprechend geändert bzw. eine falsche Einstellung korrigiert werden.

In der Ebene "Jobs" 47 sind jene Jobs, also definierte Arbeitsschritte die das entsprechende Schweißgerät 1 nach einer bestimmten Reihenfolge zur Fertigung eines bestimmten Werkstücks 16 abarbeitet, dargestellt. Hierzu ist der Inhalt der Ebene "Jobs" 47 in beispielsweise zwei senkrechte Spalten aufgeteilt. In der linken Spalte sind die Jobs dargestellt, welche für das entsprechende Schweißgerät 1 generiert oder von einem anderen Schweißgerät 1 kopiert wurden. Wird ein Job ausgewählt, werden die entsprechenden Schweißparameter des Jobs in der rechten Spalte dargestellt. Ebenso können diese Schweißparameter dementsprechend verändert werden. Zum Kopieren, Generieren oder Modifizieren von Jobs für ein oder mehrerer Schweißgeräte 1 sind entsprechende Symbole in der Ebene "Jobs" 47 angeordnet. Ein weiteres Symbol dient beispielsweise zum Speichern der entsprechenden Jobs.

Ebenso wird von der Software erkannt, wenn an einem Schweißgerät 1 an der Ein-/Ausgabevorrichtung 22 ein Schweißparameter während eines laufenden Jobs im Schweißgerät 1 verändert wird. Dies wird ebenso erkannt, sobald das Schweißgerät 1 mit dem Netzwerk verbunden und eingeschaltet ist, also sich im Leerlauf befindet, und ein Schweißparameter am Schweißgerät 1 verändert wird. Dies wird entsprechend in der Ebene "Jobs" 47 am entsprechenden Job angezeigt, beispielsweise durch eine farbliche Markierung. Beispielsweise erfolgt dies derart, dass der betreffende Job durch einen gelben Punkt markiert wird. Ebenso ist es möglich, Veränderungen eines Jobs durch eine Meldung am Monitor der Fernzugriffseinheit 31 darzustellen. Nach Auswahl des markierten Jobs sind die veränderten Schweißparameter in der rechten Spalte ebenso farblich markiert. Die geänderten Schweißparameter können vom Benutzer der Software entsprechend akzeptiert oder geändert werden. Dies erfolgt über dementsprechende Symbole in der Ebene "Jobs" 47.

In gleicher Weise werden die Jobs markiert, wenn von der Software ein Unterschied zwischen dem gespeicherten Snap-Shot und den Jobs im Schweißgerät 1 erkannt wird, also ein online-offline-Vergleich durchgeführt wird. Dieser online-offline-Vergleich wird automatisch von der Software gestartet, sobald die Software ein bereits bekanntes Schweißgerät 1, welches wieder an das Netzwerk 27 angeschlossen wird, wiedererkennt. Diese Wiedererkennung erfolgt anhand der Seriennummer bzw. der Adresse des Schweißgerätes 1, zu welchem ein Snap-Shot gespeichert ist. Erkennt die Software Unterschiede in den Einstellungen der Parameter, sprich Schweißparameter, bzw. der Konfiguration des Schweißgerätes 1, wird dies entsprechend anhand der Jobs angezeigt. Entsprechend kann anschließend der Benutzer anhand der in der Ebene "Jobs" 47 angeordneten Symbole entscheiden, ob die Konfiguration des Schweißgerätes 1 beibehalten werden soll, ob die in der Software gespeicherte Konfiguration in das Schweißgerät 1 übertragen bzw. eingespielt werden soll oder ob der Benutzer der Software das Schweißgerät 1 neu konfiguriert bzw. die Einstellungen bzw. Konfiguration des Schweißgerätes 1 anpasst. Selbstverständlich ist es auch möglich, dass der online - offline-Vergleich manuell vom Benutzer gestartet wird, beispielsweise über ein entsprechendes Symbol in.der Ebene "Jobs" 47.

Ebenso kann der online-offline-Vergleich von einem Servicetechniker durchgeführt werden, welcher beispielsweise einen Laptop, auf welchem entsprechend die Software installiert ist und Snap-Shots gespeichert sind, an das Netzwerk 27 anschließt. Dadurch kann der Servicetechniker auf einfache Art und Weise Schweißfehler beheben, da durch den online-offline-Vergleich der Unterschied zwischen den Schweißparametern im Schweißgerät 1 und dem Snap-Shot in der Ebene "Jobs" 47 auf einen Blick dargestellt wird.

In der Ebene "Doku" 48 werden entsprechende Schweißparameter wie Sollwerte bzw. Istwerte von Strom, Spannung, Gas, Geschwindigkeit des Schweißdrahtes 13, usw. zu einem durchgeführten Schweißprozess gespeichert bzw. dokumentiert. Dazu ist beispielsweise in der Ebene "Doku" 48 ein entsprechendes Pull-Down-Menü vorgesehen, mit welchem unterschiedliche Arten von detaillierten Informationen dargestellt werden können. Beispielsweise können mit dem Pull-Down die Punkte "Welds", "Section", "Error", "Actual Values" und "Command Values" ausgewählt werden. Unter dem Punkt "Welds" werden allgemeine Daten eines Schweißprozesses, wie Datum, Uhrzeit, durchschnittlicher Schweißstrom, usw. dargestellt. Unter dem Punkt "Section" ist der Verlauf eines Schweißprozesses, also die verschiedenen Phasen, detailliert mit den entsprechenden Schweißparametern dargestellt. Der Punkt "Error" stellt die Alarm- und Fehlermeldungen dar. Unter dem Punkt "Actual Values" kann das Variieren der Schweißparameter während eines Schweißprozesses mitverfolgt bzw. dargestellt werden. Beispielsweise werden hierbei die entsprechenden Schweißparameter, wie Strom und Spannung, alle 100 ms dargestellt.

Die Ebene "Logbook" 49 dient zur Speicherung der wesentlichsten Änderungen an einem Schweißgerät 1. Beispielsweise werden hier sämtliche Alarm- und Fehlermeldungen gespeichert, wann sich welcher User erfolgreich oder erfolglos am Schweißgerät 1 angemeldet hat und der Verlauf bzw. die Historie eines Jobs gespeichert bzw. dargestellt. Bei der Jobhistorie wird detailliert dargestellt, welcher Benutzer oder User der Software zu welchem Zeitpunkt welchen Schweißparameter eines bestimmten Jobs verändert hat. Dies kann mit Hilfe der Punkte "Error", "Event Jobchange" und "Event Userchange", welche durch ein Pull-Down-Menü in der Ebene "Logbook" 49 ausgewählt werden können, dargestellt werden.

Die Ebene "Statistiken" 50 dient zur Erfassung statistischer Werte eines Schweißprozesses. Beispielsweise kann für einen Schweißprozesse ein Limit für einen Schweißparameter eingestellt werden, so dass etwa ein bestimmtes Schweißstrommaximum nicht überschritten werden darf. Ist dies trotzdem der Fall, werden diese Limitüberschreitungen, d.h. dass beispielsweise ein voreingestelltes Schweißstrommaximum überschritten wird, entsprechend in der Ebene "Statistiken" 50 dargestellt bzw. gespeichert. Diese Daten können ebenso zur Bestimmung der Qualität einer Schweißnaht herangezogen werden.

In der Ebene "Diagramme" 51 können bestimmte Schweißparameter, welche in den Ebenen "Doku" 48 und "Statistiken" 50 erfasst werden, in grafischer Form dargestellt werden. Dies kann ebenso während eines laufenden Schweißprozesses eines oder mehrerer Schweißgeräte 1 mitverfolgt werden, wodurch beispielsweise Limitüberschreitungen sofort erkannt werden können bzw. als Hilfsmittel zur Erstellung von Limits verwendet werden können.

Selbstverständlich ist die Anzahl der Ebenen 45 bis 51 im Navigationsbereich 36 nicht begrenzt. Überschreitet die Anzahl der Ebenen 45 bis 51 die Anzahl der im Navigationsbereich 36 darstellbaren Ebenen 45 bis 51, können die Ebenen 45 bis 51 beispielsweise durch entsprechende Navigationselemente 43, wie bereits aus dem Navigationsbereich 34 bekannt, in horizontaler Richtung verschoben werden. Ebenso kann zusätzlich oder anstelle der zusätzlichen Navigationselemente 43 die grafische Darstellung der Ebenen 45 bis 51 verändert werden. Beispielsweise derart, dass jeder der Ebenen 45 bis 51 weniger Platz zur Verfügung steht, wodurch dementsprechend mehr Ebenen 45 bis 51 im Navigationsbereich 36 dargestellt werden können.

Nachdem in allen Ebenen 45 bis 51 die Einstellungen bzw. die Konfiguration des Schweißgerätes 1 erfolgreich durchgeführt wurden, wird dies entsprechend gespeichert. Damit ändert sich der Betriebszustand des Schweißgerätes 1 im Symbol 40 im Navigationsbereich 34, falls das Schweißgerät 1 deaktiviert war bzw. einen Fehler hatte.

Anschließend kann das Fenster, in welchem ein Schweißgerät 1 im Navigationsbereich 36 dargestellt wird, entsprechend über ein Symbol 52, beispielsweise ein Kreuz innerhalb eines Quadrates, geschlossen werden. Dadurch verschwindet das Symbol 40 für das entsprechende Schweißgerät 1 vom Navigationsbereich 34. Nach dem Schließen eines Fensters erscheint beispielsweise das zuletzt bearbeitete Schweißgerät 1 im Navigationsbereich 36, welches im Navigationsbereich 34 dargestellt ist und dementsprechend bearbeitet werden kann.

Zum Bearbeiten eines neuen Schweißgerätes 1, also einem Schweißgerät 1, welches sich noch nicht im Navigationsbereich 34 befindet, muss im Navigationsbereich 36 die Ansicht gewechselt werden. Dies erfolgt über ein entsprechendes Symbol 53, welches beispielsweise den Schriftzug "Browse" enthält und bevorzugt im oberen linken Eck der zentralen grafischen Oberfläche 32 angeordnet ist. Dadurch werden die Ebenen 45 bis 51 im Navigationsbereich 36 ausgeblendet und das Startfenster gemäß Fig. 3 geöffnet. Somit kann das gewünschte Schweißgerät 1 durch Auswahl des entsprechenden Bereichs 39 in der Produktionshalle 38 des Herstellers 37 ausgewählt werden.

Die Auswahl eines bestimmten Schweißgerätes 1 erfolgt beispielsweise über die Eingabegeräte der Fernzugriffseinheit 31, d.h. über eine Maus oder eine Tastatur, oder über einen so genannten Touch-Screen. Dazu sind die Symbole 40 für die Schweißgeräte 1, die Symbole für den Hersteller 37, die Produktionshalle 38, den Bereich 39, usw. sowie die Ebenen 45 bis 51 dementsprechend ausgebildet.

Der Navigationsbereich 35 dient zur Anordnung von entsprechenden Symbolen 54, mit denen beispielsweise die im Navigationsbereich 36 vorgenommenen Änderungen einer der Ebenen 45 bis 51 gespeichert werden kann. Ebenso kann beispielsweise ein Symbol 54 dazu genutzt werden, um die Konfiguration eines Schweißgerätes 1 auf ein weiteres Schweißgerät 1 zu übertragen. Ein weiteres Symbol 54 im Navigationsbereich 35 kann zum Ändern der Software eines Schweißgerätes 1 bzw. zur Durchführung eines Updates der Software herangezogen werden. Dies kann ebenso für mehrere gleichartige Schweißgeräte 1 gleichzeitig durchgeführt werden, wodurch die Zeit für einen Update reduziert wird. Ebenso kann dies zeitlich gesteuert werden, wodurch ein Update der Software eines bzw. mehrerer Schweißgeräte 1 automatisiert erfolgen kann.

Ebenso können zusätzliche Unterlagen und Informationen in der Software gespeichert werden, beispielsweise Konstruktionszeichnungen der zu fertigenden Werkstücke 16, Beschreibungen, detaillierte Dokumentationen zum Schweißgerät 1, usw.. Diese Unterlagen und Informationen werden entsprechend dem Schweißgerät 1, einem Job oder Ähnlichem mit Hilfe eines Links zugeordnet. Ein vorhandener Link zu einem Schweißgerät 1 ist beispielsweise durch ein zusätzliches Element im Symbol 40, beispielsweise einem Notizblock, gekennzeichnet.

Die Links können auch dazu eingesetzt werden, die Komponenten eines Schweißgerätes 1 grafisch, mit einer hinterlegten Abbildung, darzustellen. Dies wird ermöglicht, da der Steuervorrichtung 4 des Schweißgerätes 1 die angeschlossenen Komponenten wie Schweißbrenner 10 und Drahtvorschubgerät 11 bekannt sind. Diese Daten können über das Netzwerk 27 von der Steuervorrichtung 4 ausgelesen und entsprechend am Monitor der Fernzugriffseinheit 31 dargestellt werden.

Zusätzlich können die Komponenten eines Schweißgerätes 1 auf deren Funktion und Verschleiß überprüft werden. Beispielsweise kann aufgrund der Betriebsstunden des Schweißgerätes 1 bzw. des Schweißbrenners 10 berechnet werden, wann die Verschleißteile zu wechseln sind. Wird beispielsweise ein gewisser Schwellwert unterschritten, generiert die Software eine Alarmmeldung. Ebenso kann auf diese Weise die Restmenge des Schweißdrahtes 13 festgestellt werden, worauf die Software entsprechend reagieren kann. In gleicher Weise kann die Funktion bzw. der Betriebszustand der Komponenten des Schweißgerätes 1 überprüft werden.

## Patentansprüche

1. Fernzugriffseinheit (31) zur Verwaltung von über Schnittstellen (28) mit einem Netzwerk (27) verbundenen Schweißgeräten (1), mit einem Anschluss zur Verbindung mit dem Netzwerk (27), einer Anzeige zur Darstellung der Schweißgeräte (1) und deren Parameter bzw. Konfigurationen für einen Schweißprozess, mit einem Speicher zum Speichern der Parameter bzw. Konfigurationen der Schweißgeräte (1), und mit Eingabegeräten zur Bedienung, wobei die Anzeige als zentrale grafische Oberfläche (32) zur Darstellung einer beliebigen Anzahl der im Netzwerk (27) angeschlossenen bzw. aktivierten Schweißgeräte (1) in Abhängigkeit von Pfaden (41), welche den Schweißgeräten (1) zugeordnet sind, sowie zur Darstellung deren Parameter und Konfigurationen ausgebildet ist, **dadurch gekennzeichnet, dass** der Speicher zum Speichern der Parameter bzw. Konfigurationen der Schweißgeräte (1) zusammen mit einer eindeutigen Identifizierung der Schweißgeräte (1) ausgebildet ist, dass eine Einheit zur Erkennung der im Netzwerk (27) angeschlossenen bzw. aktivierten bereits bekannten Schweißgeräte (1) anhand der eindeutigen Identifizierung vorgesehen ist, und dass ein Modul zum automatischen Vergleichen der gespeicherten Parameter bzw. Konfigurationen der Schweißgeräte (1) mit den aktuellen Parametern bzw. Konfigurationen der erkannten aktuell im Netzwerk (27) angeschlossenen und aktivierten Schweißgeräte (1) vorgesehen ist, und dass die Anzeige zur Darstellung der Unterschiede zwischen den aktuellen und den gespeicherten Parametern bzw. Konfigurationen der Schweißgeräte (1) ausgebildet ist.

2. Fernzugriffseinheit (31) nach Anspruch 1, **dadurch gekennzeichnet, dass** die zentrale grafische Oberfläche (32) innerhalb eines Fensters mehrere Navigationsbereiche (33 bis 36) aufweist.

3. Fernzugriffseinheit (31) nach Anspruch 2, **dadurch gekennzeichnet, dass** ein Navigationsbereich (33) als Menüleiste mit zumindest einem Menüpunkt für übergeordnete Einstellungen der weiteren Navigationsbereiche (34 bis 36) ausgebildet ist.

4. Fernzugriffseinheit (31) nach einem der Ansprüche 1 bis 3, **dadurch gekennzeichnet, dass** die im Netzwerk (27) befindlichen Schweißgeräte (1) unterschiedlichen Bereichen (39) zugeordnet sind.

5. Fernzugriffseinheit (31) nach einem der Ansprüche 2 bis 4, **dadurch gekennzeichnet, dass** ein weiterer Navigationsbereich (36) zur Auswahl von zumindest einem Schweißgerät (1) und zur Konfiguration eines der ausgewählten Schweißgeräte (1) ausgebildet ist.

6. Fernzugriffseinheit (31) nach Anspruch 5, **dadurch gekennzeichnet, dass** die Auswahl eines Schweißgerätes (1) im Navigationsbereich (36) über mehrere Schritte, insbesondere in Hersteller (37), Produktionshalle (38) und Bereiche (39), aufgeteilt ist.

7. Fernzugriffseinheit (31) nach Anspruch 5, **dadurch gekennzeichnet, dass** ein Navigationsbereich (36) zur Auswahl und Konfiguration der Schweißgeräte (1) ausgebildet und in mehrere Ebenen (45 bis 51) unterteilt ist, insbesondere in die Ebenen Übersicht (45), Panel (46), Jobs (47), Doku (48) , Logbook (49), Statistiken (50) und Diagramme (51).

8. Fernzugriffseinheit (31) nach einem der Ansprüche 2 bis 7, **dadurch gekennzeichnet, dass** ein Schweißgerät (1) in den Navigationsbereichen (33 bis 36) als Symbol (40) dargestellt ist.

9. Fernzugriffseinheit (31) nach einem der Ansprüche 2 bis 8, **dadurch gekennzeichnet, dass** ein weiterer Navigationsbereich (34) zur Darstellung der Schweißgeräte (1), welche aktuell konfiguriert werden, ausgebildet ist und die symbole (40) auswählbar sind.

10. Fernzugriffseinheit (31) nach Anspruch 9, **dadurch gekennzeichnet, dass** in den Symbolen (40) zumindest die Bezeichnung, eine grafische Abbildung und der Status der Schweißgeräte (1) dargestellt ist.

11. Fernzugriffseinheit (31) nach einem der Ansprüche 2 bis 10, **dadurch gekennzeichnet, dass** ein weiterer Navigationsbereich (35) zum Konfigurieren mehrerer Schweißgeräte gleichzeitig ausgebildet ist.

12. Fernzugriffseinheit (31) nach einem der Ansprüche 2 bis 11, **dadurch gekennzeichnet, dass** zumindest in einem der Navigationsbereiche (33 bis 36) eine Suchfunktion integriert ist.

13. Fernzugriffseinheit (31) nach einem der Ansprüche 2 bis 12, **dadurch gekennzeichnet, dass** den Navigationsbereichen (33 bis 36) zumindest ein Navigationselement (43) zur Verschiebung und Darstellung nicht sichtbarer Elemente, wie die Symbole (40) oder die Ebenen (45-51), angeordnet ist.

14. Fernzugriffseinheit (31) nach einem der Ansprüche 2 bis 13, **dadurch gekennzeichnet, dass** die Eingabegeräte zur Bedienung der in den Navigationsbereichen (33-36) dargestellten Elementen, wie die Symbole (40) oder die Ebenen (45-51) durch eine Computermaus oder eine Tastatur gebildet sind.

15. Fernzugriffseinheit (31) nach einem der Ansprüche 2 bis 13, **dadurch gekennzeichnet, dass** die Eingabegeräte zur Bedienung der in den Navigationsbereichen (33-36) dargestellten Elementen, wie die Symbole (40) oder die Ebenen (45-51) durch eine als Touch-Screen ausgebildete Anzeige gebildet sind.

16. Fernzugriffseinheit (31) nach einem der Ansprüche 1 bis 15, **dadurch gekennzeichnet, dass** die Schnittstelle (28) des Schweißgerätes (1) eine im Netzwerk (27) eindeutige Identifizierung aufweist.

17. Verfahren zur Kommunikation zwischen zumindest einer Fernzugriffseinheit (31) und zumindest einem in einem Netzwerk (27) angeordneten Schweißgerät (1) mit zumindest einer Stromquelle (2), einer Steuervorrichtung (4) und einer Schnittstelle (28) zum Netzwerk (27), wobei die Fernzugriffseinheit (31) zur Verwaltung der Schweißgeräte (1) ausgebildet ist, und einen Speicher zum Speichern der Parameter bzw. Konfigurationen für einen Schweißprozess der Schweißgeräte (1) aufweist, **dadurch gekennzeichnet, dass** eine beliebige Anzahl an im Netzwerk (27) angeschlossenen bzw. aktivierten Schweißgeräten (1) in Abhängigkeit von Pfaden (41), welche den Schweißgeräten (1) zugeordnet werden, sowie deren Parameter und Konfigurationen angezeigt werden, dass die Parameter bzw. Konfigurationen im Netzwerk (27) angeschlossener Schweißgeräte (1) zusammen mit einer eindeutigen Identifizierung der Schweißgeräte (1) gespeichert werden, und im Netzwerk (27) angeschlossene bzw. aktivierte bereits bekannte Schweißgeräte (1) anhand der eindeutigen Identifizierung automatisch erkannt werden, und dass die gespeicherten Parameter bzw. Konfigurationen der Schweißgeräte (1) mit den aktuellen Parametern bzw. Konfigurationen der Schweißgeräte (1) automatisch verglichen werden, und dass die Unterschiede zwischen den aktuellen und den gespeicherten Parameter bzw. Konfigurationen der Schweißgeräte (1) angezeigt werden.

18. Verfahren nach Anspruch 17, **dadurch gekennzeichnet, dass** eine Sicherung der Konfiguration im Schweißgerät (1) automatisch nach einem definierten Zeitpunkt oder periodisch durchgeführt wird.

19. Verfahren nach Anspruch 17 oder 18, **dadurch gekennzeichnet, dass** die gespeicherten Parameter bzw. Konfigurationen zumindest eines Schweißgerätes (1) auf zumindest ein Schweißgerät (1) zeitlich gesteuert übertragen werden.

20. Verfahren nach Anspruch 19, **dadurch gekennzeichnet, dass** die gespeicherten Parameter bzw. Konfigurationen zumindest eines Schweißgerätes (1) auf mehrere Schweißgeräte (1) gleichzeitig übertragen werden.

21. Verfahren nach einem der Ansprüche 17 bis 20, **dadurch gekennzeichnet, dass** eine Software für die Steuervorrichtung (4) zumindest eines Schweißgerätes (1) zeitlich gesteuert aktualisiert wird.

22. Verfahren nach einem der Ansprüche 17 bis 21, **dadurch gekennzeichnet, dass** die detaillierte Historie vorgenommener Änderungen der Parameter bzw. Konfigurationen der Schweißgeräte (1) dargestellt bzw. gespeichert wird.

23. Verfahren nach einem der Ansprüche 17 bis 22, **dadurch gekennzeichnet, dass** der Betriebszustand der Schweißgeräte (1) an- gezeigt wird.

## Claims

1. Remote access unit (31) for managing welding devices (1) connected to a network (27) via interfaces (28), comprising a connection for connecting to the network (27), a display for displaying the welding devices (1) and their parameters and/or configurations for a welding process, a memory for storing the parameters and/or configurations of the welding devices (1), and input units for operating, wherein the display is designed as a central graphical surface (32) for displaying any number of welding devices (1) which are connected to and/or activated in the network (27) according to paths (41) assigned to the welding devices (1), as well as for displaying their parameters and configurations, **characterised in that** the memory is designed for storing the parameters and/or configurations of the welding devices (1) together with a unique identification of the welding devices (1), and **in that** a unit is provided for identifying the already known welding devices (1) connected to and/or activated in the network (27) on the basis of the unique identification, and **in that** a module is provided for automatically comparing the stored parameters and/or configurations of the welding devices (1) with the current parameters and/or configurations of the identified welding devices (1) that are currently connected to and/or activated in the network (27), and **in that** the display is designed for displaying the differences between the current and stored parameters and/or configurations of the welding devices (1).

2. Remote access unit (31) according to claim 1, **characterised in that** the central graphical surface (32) has several navigation areas (33 to 36) within a window.

3. Remote access unit (31) according to claim 2, **characterised in that** a navigation area (33) is designed as a menu bar with at least one menu item for general settings of the further navigation areas (34 to 36).

4. Remote access unit (31) according to any one of claims 1 to 3, **characterised in that** the welding devices (1) present in the network (27) are assigned to different areas (39).

5. Remote access unit (31) according to any one of claims 2 to 4, **characterised in that** a further navigation area (36) is designed for selection of at least one welding device (1) and for configuration of one of the welding devices (1) selected.

6. Remote access unit (31) according to claim 5, **characterised in that** the selection of a welding device (1) in the navigation area (36) is divided into several steps, in particular into producer (37), production hall (38), and areas (39).

7. Remote access unit (31) according to claim 5, **characterised in that** a navigation area (36) is designed for selection and configuration of the welding devices (1) and is divided into several levels (45 to 51), in particular into the levels overview (45), panel (46), jobs (47), documentation (48), logbook (49), statistics (50), and diagrams (51).

8. Remote access unit (31) according to any one of claims 2 to 7, **characterised in that** a welding device (1) is displayed as a symbol (40) in the navigation areas (33 to 36).

9. Remote access unit (31) according to any one of claims 2 to 8, **characterised in that** a further navigation area (34) is designed for displaying the welding devices (1) which are currently being configured, and **in that** the symbols (40) are selectable.

10. Remote access unit (31) according to claim 9, **characterised in that** at least the denomination, a graphical representation and the state of the welding devices (1) are displayed in the symbols (40).

11. Remote access unit (31) according to any one of claims 2 to 10, **characterised in that** a further navigation area (35) is designed for configuration of several welding devices at the same time.

12. Remote access unit (31) according to any one of claims 2 to 11, **characterised in that** a search function is integrated in at least one of the navigation areas (33 to 36).

13. Remote access unit (31) according to any one of claims 2 to 12, **characterised in that** at least one navigation element (43) is provided in the navigation areas (33 to 36) for moving and displaying invisible elements, such as the symbols (40) or the levels (45 - 51).

14. Remote access unit (31) according to any one of claims 2 to 13, **characterised in that** the input units for operating the elements displayed in the navigation areas (33 - 36), such as the symbols (40) or the levels (45 - 51), are formed by a computer mouse or a keyboard.

15. Remote access unit (31) according to any one of claims 2 to 13, **characterised in that** the input units for operating the elements displayed in the navigation areas (33 - 36), such as the symbols (40) or the levels (45 - 51), are formed by a touch-screen display.

16. Remote access unit (31) according to any one of claims 1 to 15, **characterised in that** the interface (28) of the welding device (1) has an identification unique in the network (27).

17. Method for communication between at least one remote access unit (31) and at least one welding device (1) provided in a network (27), with at least one current source (2), a control device (4) and an interface (28) to the network (27), wherein the remote access unit (31) is designed for managing the welding devices (1) and comprises a memory for storing the parameters and/or configurations for a welding process of the welding devices (1), **characterised in that** any number of welding devices (1) which are connected to and/or activated in the network (27) according to paths (41) assigned to the welding devices (1) as well as their parameters and configurations are displayed, and **in that** the parameters and/or configurations of the welding devices (1) connected to the network (27) are stored together with a unique identification of the welding devices (1), and **in that** already known welding devices (1) connected to and/or activated in the network (27) are automatically identified on the basis of the unique identification, and **in that** the stored parameters and/or configurations of the welding devices (1) are automatically compared with the current parameters and/or configurations of the welding devices (1), and **in that** the differences between the current and the stored parameters and/or configurations of the welding devices (1) are displayed.

18. Method according to claim 17, **characterised in that** the configuration in the welding device (1) is backed up automatically after a defined point of time or periodically.

19. Method according to claim 17 or 18, **characterised in that** the stored parameters and/or configurations of at least one welding device (1) are transferred to at least one welding device (1) in a timely controlled manner.

20. Method according to claim 19, **characterised in that** the stored parameters and/or configurations of at least one welding device (1) are transferred to several welding devices (1) at the same time.

21. Method according to any one of claims 17 to 20, **characterised in that** a software for the control device (4) of at least one welding device (1) is updated in a timely controlled manner.

22. Method according to any one of claims 17 to 21, **characterised in that** the detailed history of changes made in the parameters and/or configurations of the welding devices (1) is displayed and/or stored.

23. Method according to any one of claims 17 to 22, **characterised in that** the operational state of the welding devices (1) is displayed.

## Revendications

1. Unité d'accès distant (31) pour la gestion de postes de soudage (1) connectés par des interfaces (28) à un réseau (27), comprenant une connexion avec le réseau (27), un affichage pour la représentation des postes de soudage (1) et leurs paramètres ou leurs configurations pour un processus de soudage, une mémoire pour sauvegarder les paramètres ou les configurations des postes de soudage (1) et des périphériques d'entrée de données pour la commande, dans laquelle l'affichage se présente sous la forme d'une surface graphique centrale (32) pour représenter un nombre quelconque de postes de soudage (1) connectés ou activés dans le réseau (27) en fonction de trajets (41), qui sont affectés aux postes de soudage (1), et pour représenter leurs paramètres ou leurs configurations , **caractérisée en ce que** la mémoire destinée à sauvegarder les paramètres ou les configurations des postes de soudage (1) est conformée conjointement avec une identification univoque des postes de soudage (1), **en ce qu'**une unité de détection des postes de soudage (1) déjà connus connectés ou activés dans le réseau (27) est prévue sur base de l'identification univoque, **en ce qu'**il est prévu un module de comparaison automatique des paramètres ou des configurations mémorisé(e)s des postes de soudage (1) avec les paramètres ou les configurations réel(le)s des postes de soudage (1) détectés, connectés et activés effectivement dans le réseau (27) et **en ce que** l'affichage est réalisé pour représenter les différences entre les paramètres ou les configurations réel(le)s et les paramètres ou les configurations mémorisé(e)s des postes de soudage (1).

2. Unité d'accès distant (31) selon la revendication 1, **caractérisée en ce que** la surface graphique centrale (32) présente plusieurs zones de navigation (33 à 36) dans une fenêtre.

3. Unité d'accès distant (31) selon la revendication 2, **caractérisée en ce qu'**une zone de navigation (33) se présente sous la forme d'une barre de menu avec au moins un point de menu pour des réglages prioritaires des autres zones de navigation (34 à 36).

4. Unit d'accès distant (31) selon l'une quelconque des revendications 1 à 3, **caractérisée en ce que** les postes de soudage (1) se trouvant dans le réseau (27) sont affectés à des zones différentes (39).

5. Unité d'accès distant (31) selon l'une quelconque des revendications 2 à 4, **caractérisée en ce qu'**une autre zone de navigation (36) est élaborée pour sélectionner au moins un poste de soudage (1) et pour configurer un des postes de soudage choisis (1).

6. Unité d'accès distant (31) selon la revendication 5, **caractérisée en ce que** le choix d'un poste de soudage (1) dans la zone de navigation (36) est subdivisé en plusieurs étapes, en particulier en fabricants (37), en salles de production (38) et en zones (39).

7. Unité d'accès distant (31) selon la revendication 5, **caractérisée en ce qu'**une zone de navigation (36) est élaborée pour choisir et configurer les postes de soudage (1) et subdivisée en plusieurs niveaux (45 à 51), en particulier en niveaux aperçu (45), panneau (46), tâches (47), documentation (48), journal d'enregistrement (49), statistiques (50) et diagrammes (51).

8. Unité d'accès distant (31) selon l'une quelconque des revendications 2 à 7, **caractérisée en ce qu'**un poste de soudage (1) est représenté dans les zones de navigation (33 à 36) sous la forme d'un symbole (40).

9. Unité d'accès distant (31) selon l'une quelconque des revendications 2 à 8, **caractérisée en ce qu'**une autre zone de navigation (34) est élaborée pour représenter les postes de soudage (1) qui sont effectivement configurés, et les symboles (40) peuvent être sélectionnés.

10. Unité d'accès distant (31) selon la revendication 9, **caractérisée en ce qu'**au moins la désignation, une illustration graphique et l'état des postes de soudage (1) sont représentés sur les symboles (40).

11. Unité d'accès distant (31) selon l'une quelconque des revendications 2 à 10, **caractérisée en ce qu'**une autre zone de navigation (35) est élaborée en même temps pour configurer plusieurs postes de soudage.

12. Unité d'accès distant (31) selon l'une quelconque des revendications 2 à 11, **caractérisée en ce qu'**une fonction de recherche est intégrée à au moins l'une des zones de navigation (33 à 36).

13. Unité d'accès distant (31) selon l'une quelconque des revendications 2 à 12, **caractérisée en ce que**, dans les zones de navigation (33 à 36), au moins un élément de navigation (43) est agencé pour déplacer et représenter des éléments non visibles, tels que les symboles (40) ou les niveaux (45 - 51).

14. Unité d'accès distant (31) selon l'une quelconque des revendications 2 à 13, **caractérisée en ce que** les périphériques d'entrée de données sont formés pour commander les éléments représentés dans les zones de navigation (33 - 36), tels que les symboles (40) ou les niveaux (45 - 51), par une souris d'ordinateur ou un clavier.

15. Unité d'accès distant (31) selon l'une quelconque des revendications 2 à 13, **caractérisée en ce que** les périphériques d'entrée de données sont formés pour commander les éléments représentés dans les zones de navigation (33 - 36), tels que les symboles (40) ou les niveaux (45 - 51), par un affichage se présentant sous la forme d'un écran tactile.

16. Unité d'accès distant (31) selon l'une quelconque des revendications 1 à 15, **caractérisée en ce que** l'interface (28) du poste de soudage (1) présente une identification univoque dans le réseau (27).

17. Procédé de communication entre au moins une unité d'accès distant (31) et au moins un poste de soudage (1) agencé dans un réseau (27) avec au moins une source de courant (2), un dispositif de commande (4) et une interface (28) avec le réseau (27), dans lequel l'unité d'accès distant (31) est élaborée pour la gestion des postes de soudage (1) et présente une mémoire pour sauvegarder les paramètres ou les configurations pour un processus de soudage des postes de soudage (1), **caractérisé en ce qu'**un nombre quelconque de postes de soudage (1) connectés ou activés dans le réseau (27) est affiché en fonction des trajets (41), qui sont affectés aux postes de soudage (1), ainsi que leurs paramètres ou leurs configurations, **en ce que** les paramètres ou les configurations des postes de soudage (1) connectés dans le réseau (27) sont mémorisé(e)s conjointement avec une identification univoque des postes de soudage (1) et des postes de soudage (1) déjà connus connectés ou activés dans le réseau (27) sont détectés automatiquement sur la base de l'identification univoque, **en ce que** les paramètres ou les configurations mémorisé(e)s des postes de soudage (1) sont comparé(e)s automatiquement aux paramètres ou aux configurations réel(le)s des postes de soudage (1) et **en ce que** les différences entre les paramètres ou les configurations réel(le)s et les paramètres ou les configurations mémorisé(e)s des postes de soudage (1) sont affichées.

18. Procédé selon la revendication 17, **caractérisé en ce qu'**une sauvegarde de la configuration dans le poste de soudage (1) est réalisée automatiquement à un moment défini ou périodiquement.

19. Procédé selon la revendication 17 ou 18, **caractérisé en ce que** les paramètres ou les configurations mémorisé(e)s d'au moins un poste de soudage (1) sont transmis(es) à au moins un poste de soudage (1) de manière temporisée.

20. Procédé selon la revendication 19, **caractérisé en ce que** les paramètres ou les configurations mémorisé(e)s d'au moins un poste de soudage (1) sont transmis simultanément à plusieurs postes de soudage (1).

21. Procédé selon l'une quelconque des revendications 17 à 20, **caractérisé en ce qu'**un logiciel pour le dispositif de commande (4) d'au moins un poste de soudage (1) est mis à jour de manière temporisée.

22. Procédé selon l'une quelconque des revendications 17 à 21, **caractérisé en ce que** l'historique détaillé de modifications effectuées des paramètres ou des configurations des postes de soudage (1) est représenté ou mémorisé.

23. Procédé selon l'une quelconque des revendications 17 à 22, **caractérisé en ce que** l'état de fonctionnement des postes de soudage (1) est affiché.
